# EUROPEAN PATENT SPECIFICATION

(11) **EP 3 546 193 B1**
(45) Date of publication and mention of the grant of the patent: **28.04.2021**
(21) Application number: 19166069.5
(22) Date of filing: 29.03.2019
(51) Int. Cl.: B29C 45/83, B29C 45/66

(54) **INJECTION MOLDING MACHINE**
SPRITZGIESSMASCHINE
MACHINE DE MOULAGE À INJECTION

(30) Priority: 30.03.2018 JP 2018068780
(43) Date of publication of application: 02.10.2019
(73) Proprietor: Sumitomo Heavy Industries, Ltd., Tokyo 141-6025 (JP)
(72) Inventor: ZHANG, Xin, Yokosuka-shi, Kanagawa 237-8555 (JP); MOROZUMI, Tomohito, Chiba-shi, Chiba 263-0001 (JP); TANAKA, Yoshitada, Chiba-shi, Chiba 263-0001 (JP); ITO, Yosuke, Chiba-shi, Chiba 263-0001 (JP)
(74) Representative: Louis Pöhlau Lohrentz

(56) References cited:
- WO-A1-2005/077639
- DE-A1-102008 024 514
- JP-A- H0 671 412
- KR-A- 20160 073 023
- US-A1- 2008 152 271
- US-A1- 2016 223 015

## Description

### BACKGROUND OF THE INVENTION

### Field of the Invention

The present invention relates to an injection molding machine.

### Description of Related Art

An injection molding machine which opens or closes a mold and clamps the mold using a toggle link mechanism is known. The toggle link mechanism is connected by a link and a connection pin and a bush is installed between the link and the connection pin. However, if the mold is repeatedly opened and closed, the bush and the connection pin slide each other, and the bush is worn.

Accordingly, a method is known, in which a lubricant such as oil is interposed between the bush and the connection pin so as to increase lubricity of a sliding surface, and wear of the bush decreases (US Patent Application Publication No. 2,299,119). International Patent Application WO2005/077639A1 discloses a mold closing unit of an injection molding which includes a lubricant mechanism which supplies the lubricant to a portion between a bush and a connection pin. German Patent Application DE102008024514A1 discloses a lubricating device for an injection molding machine. Japanese Patent Application JPH0671412A discloses the lubricating mechanism that supplies the lubricant into link pin bushes. Korean Patent Application KR20160073023A discloses an oil distribution device for a toggle type injection molding machine. US Patent Application US2016/223015A1 discloses sleeve bearings for pin joints for construction and mining machinery. US Patent Application US2008/152271A1 discloses a self-lubricating guide member for joints or bearings.

### SUMMARY OF THE INVENTION

Meanwhile, in the method disclosed in US Patent Application Publication No. 2,299,119, the lubricant is supplied to a clearance between the bush and the connection pin from one supply port. Accordingly, a distribution failure of the lubricant is generated on sliding surfaces of the bush and the connection pin, and there is a concern that wear of the bush is generated in the portion. Therefore, an injection molding machine capable of appropriately lubricating the sliding surfaces of the bush and the connection pin is required.

Accordingly, an object of the present invention is to provide an injection molding machine which appropriately lubricates a sliding surface of a link mechanism.

According to an aspect of the present invention, there is provided an injection molding machine including: a toggle mechanism which connects a movable platen and a rear platen to each other, in which the toggle mechanism includes a plurality of links, a first connection portion which connects the movable platen and the link to each other, a second connection portion which connects the links to each other, and a third connection portion which connects the rear platen and the link to each other, and at least one connection portion of the first to third connection portions, includes a bush, a connection pin which is inserted into the bush, a supply path through which a lubricant is supplied to a bearing clearance which is a clearance between the bush and the connection pin, a discharge path through which the lubricant is discharged from the bearing clearance, and a circumferential supply promotion mechanism which promotes a supply of the lubricant supplied from an opening portion on the bearing clearance side of the supply path to the bearing clearance, in a circumferential direction of the connection pin, the circumferential supply promotion mechanism is a plurality of the supply path opening portions which are provided in the circumferential direction of the connection pin, and the supply path opening portions are provided on an outer peripheral surface of the connection pin and are provided to sandwich a movable range of the connection portion when viewed in the circumferential direction of the connection pin.

According to the present invention, it is possible to provide the injection molding machine which appropriately lubricates the sliding surface of the link mechanism.

### BRIEF DESCRIPTION OF THE DRAWINGS

Fig. 1 is a view showing a state when a mold opening of an injection molding machine according to a first embodiment is completed.
Fig. 2 is a view showing a state when a mold of the injection molding machine according to the first embodiment is clamped.
Fig. 3 is a configuration view of a toggle mechanism and a lubricant supply device included in the injection molding machine according to the first embodiment.
Fig. 4 is a sectional view taken along lineA-Aof a connection portion.
Fig. 5 is a sectional schematic view explaining a lubrication structure between a connection pin and a bush in a connection portion of the first embodiment.
Fig. 6 is a sectional schematic view explaining a lubrication structure between a connection pin and a bush in a connection portion of a second embodiment, which goes beyond the scope of the present invention.
Fig. 7 is a sectional schematic view explaining a lubrication structure between a connection pin and a bush in a connection portion of a third embodiment.
Fig. 8 is a sectional schematic view explaining a lubrication structure between a connection pin and a bush in a connection portion of a fourth embodiment.
Fig. 9 is a sectional schematic view explaining a lubrication structure between a connection pin and a bush in a connection portion of a fifth embodiment.
Fig. 10 is a sectional schematic view explaining a lubrication structure between a connection pin and a bush in a connection portion of a sixth embodiment.
Fig. 11 is a sectional schematic view explaining a lubrication structure between a connection pin and a bush in a connection portion of a reference example.
Fig. 12 is a sectional schematic view explaining a lubrication structure between a connection pin and a bush in a connection portion of a seventh embodiment.
Fig. 13 is a sectional schematic view explaining a movable range in the connection portion of the seventh embodiment.
Figs. 14A and 14B are views showing an operation in the connection portion of the seventh embodiment.

### DETAILED DESCRIPTION OF THE INVENTION

Hereinafter, embodiments of the present invention will be described with reference to the drawings. In each drawing, the same or corresponding reference numerals are assigned to the same or corresponding configurations, and descriptions thereof are omitted.

### <<First Embodiment>>

### (Injection Molding Machine)

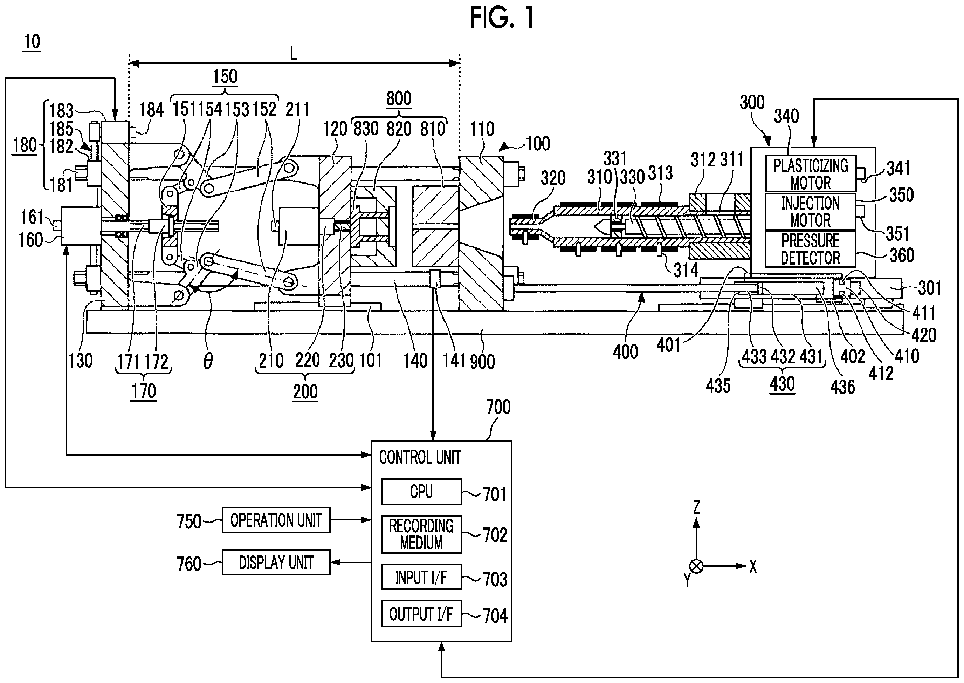

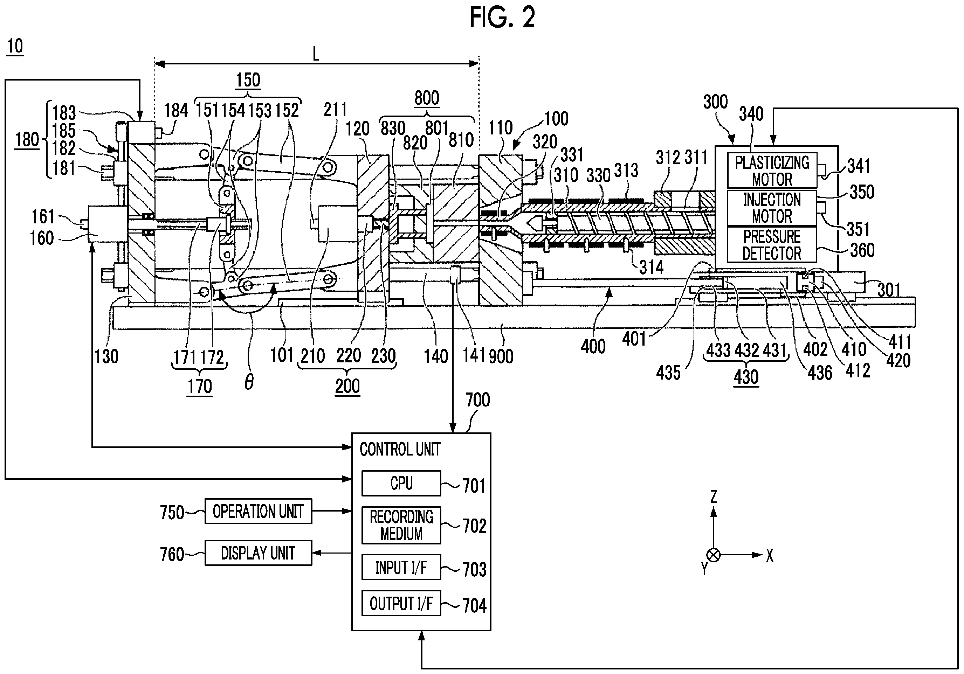

Fig. 1 is a diagram showing a state when a mold opening of an injection molding machine according to a first embodiment is completed. Fig. 2 is a diagram showing a state when a mold of the injection molding machine according to the first embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. As shown in Figs. 1 and 2, the injection molding machines 10 includes the mold clamping unit 100, an ejector unit 200, an injection unit 300, a movement unit 400, a control unit 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is opened is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support (rear platen) 130 is connected so as to be separated from the stationary platen 110, and is placed on the frame 900 to be movable in mold opening and closing directions. In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the control unit 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the control unit 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward from the mold opening start position to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, the speed or positions (including mold closing start position, speed switching position, mold closing completion position, and mold clamping position) of the crosshead 151 and the mold clamping force in the mold closing process and the mold clamping process are collectively set as a series of setting conditions. The mold closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by a change of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drives gears is rotatably held by a center portion of the toggle support 130. In addition, the rotation transmission portion 185 may include a belt, a pulley, or the like instead of the gear.

An operation of the mold space adjustment mechanism 180 is controlled by the control unit 700. The control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 may be rotatably held by the toggle support 130 and the tie bar 140 on which the screw shaft 181 is formed is fixed to the stationary platen 110. However, the present invention is not limited to this.

For example, the screw nut 182 may be rotatably held by the stationary platen 110 and the tie bar 140 may be fixed to the toggle support 130. In this case, it is possible to adjust the gap L by rotating the screw nut 182.

In addition, the screw nut 182 may be fixed to the toggle support 130 and the tie bar 140 may be held rotatably by the stationary platen 110. In this case, it is possible to adjust the gap L by rotating the tie bar 140.

In addition, the screw nut 182 maybe fixed to the stationary platen 110 and the tie bar 140 may be held rotatably by the toggle support 130. In this case, it is possible to adjust the gap L by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the control unit 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In the mold space adjustment mechanism 180, the gap L is adjusted by rotating one of the screw shaft 181 and the screw nut 182 which are screwed to each other. A plurality of the mold space adjustment mechanisms 180 may be used, and a plurality of the mold space adjustment motors 183 may be used.

In addition, in the present embodiment, the mold space adjustment mechanism 180 includes the screw shaft 181 which is formed on the tie bar 140 and the screw nut 182 which is screwed to the screw shaft 181 in order to adjust the gap L. However, the present invention is not limited to this.

For example, the mold space adjustment mechanism 180 may have a tie bar temperature controller which adjusts a temperature of the tiebar140. The tie bar temperature controller is attached to each tie bar 140, and the temperatures of the plurality of tie bars 140 are adjusted to be in conjunction with each other. As the temperature of the tie bar 140 increases, the tie bar 140 is lengthened by thermal expansion, and thus, the gap L increases. The temperatures of the plurality of tie bars 140 can be adjusted independently.

For example, the tie bar temperature controller includes a heating unit such as a heater and adjusts the temperature of the tie bar 140 by heating. The tie bar temperature controller includes a cooler such as a water cooling jacket and may adjust the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are the upward-downward direction. The vertical type mold clamping unit has a lower platen, an upper platen, a toggle support, a tie bar, a toggle mechanism, a mold clamping motor, or the like. One of the lower platen and the upper platen is used for a stationary platen, and the other one is used for a movable platen. A lower mold is attached to the lower platen and an upper mold is attached to the upper platen. The upper mold and the lower mold constitutes a mold unit. The lower mold may be attached to the lower platen via a rotary table. The toggle support is disposed below the lower platen and is connected to the upper platen via the tie bar. The tie bar connects the upper platen and the toggle support with a gap therebetween in the mold opening and closing directions. The toggle mechanism is disposed between the toggle support and the lower platen and lifts and lowers the movable platen. The mold clamping motor operates the toggle mechanism. In a case where the mold clamping unit is the vertical type mold clamping unit, in general, the number of the tie bars is three. In addition, the number of the tie bars is not limited to three.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the control unit 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the control unit 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The control unit 700 controls the heating unit 313 such that a detection temperature of the temperature detector 314 becomes a set temperature for each zone.

The nozzle 320 is provided on the front end portion of the cylinder 310 and presses the mold unit 800. The heating unit 313 and the temperature detector 314 are provided on an outer periphery of the nozzle 320. The control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A back flow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the control unit 700. The pressure detector 360 is provided on a transmission path of the force between the injection motor 350 and the screw 330 and detects the force applied to the pressure detector 360.

The pressure detector 360 sends a signal indicating a detection result to the control unit 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a holding pressure process, a filling process, or the like under the control of the control unit 700.

In the plasticizing process, the plasticizing motor 340 is driven to rotate the screw 330 at a set rotational speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotational speed of the screw 330 is detected using a plasticizing motor encoder 341. The plasticizing motor encoder 341 detects the rotation of the plasticizing motor 340 and sends a signal indicating a detection result to the control unit 700. In addition, a screw rotational speed detector which detects the rotational speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the control unit 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

In addition, in the filling process, after the position of the screw 330 reaches the set position, the screw 330 may be temporarily stopped at the set position, and thereafter, the V/P switching may be performed. Immediately before the V/P switching, instead of the screw 330 being stopped, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the control unit 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by a solidified molding material. This state is referred to a gate seal and a backflow of the molding material from the cavity space 801 is prevented. A cooling process starts after the holding pressure process . In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the upward-downward direction . The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during the plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a signal from the control unit 700 and by the rotation torque corresponding to the control signal from the control unit 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Control Unit)

For example, the control unit 700 includes a computer, and as shown in Figs. 1 and 2, the control unit 700 includes a Central Processing Unit (CPU) 701, a recording medium 702 such as a memory, an input interface 703, and an output interface 704. The control unit 700 performs various controls by causing the CPU 701 to execute a program stored in the recording medium 702. In addition, the control unit 700 receives a signal from the outside through the input interface 703 and transmits a signal to the outside through the output interface 704.

The control unit 700 repeatedly performs the mold closing process, the mold clamping process, the mold opening process, or the like to repeatedly manufacture the molding product. In addition, the control unit 700 performs the plasticizing process, the filling process, the holding pressure process, or the like between the mold clamping processes. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the mold clamping process, the filling process, the holding pressure process, the cooling process, the mold opening process, and the ejection process in this order. Here, this order is an order of the start of each process. The filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process maybe performed during the cooling process of the previous molding cycle, and in this case, the mold closing process may be performed at an initial stage of the molding cycle . In addition, the filling process may start during the mold closing process. Moreover, the ejection process may be started during the mold opening process. In a case where an on/off valve for opening or closing a flow path of the nozzle 320, the mold opening process may be started during the plasticizing process. Accordingly, even when the mold opening process is started during the plasticizing process, the molding material does not leak from the nozzle 320 if the on/off valve closes the flow path of the nozzle 320.

The control unit 700 is connected to an operation unit 750 or a display unit 760. The operation unit 750 receives an input operation from a user and outputs a signal corresponding to the input operation to the control unit 700. The display unit 760 displays an operation screen corresponding to the input operation in the operation unit 750, under the control of the control unit 700.

The operation screen is used for the setting of the injection molding machine 10 or the like. A plurality of operation screens are provided, and thus, are displayed to be switched or to overlap each other. The user operates the operation unit 750 while viewing the operation screen displayed on the display unit 760 to perform the setting (including an input of a set value) of the injection molding machine 10 or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be independently provided. In addition, a plurality of operation units 750 may be provided.

### (Lubrication Configuration in Toggle Mechanism)

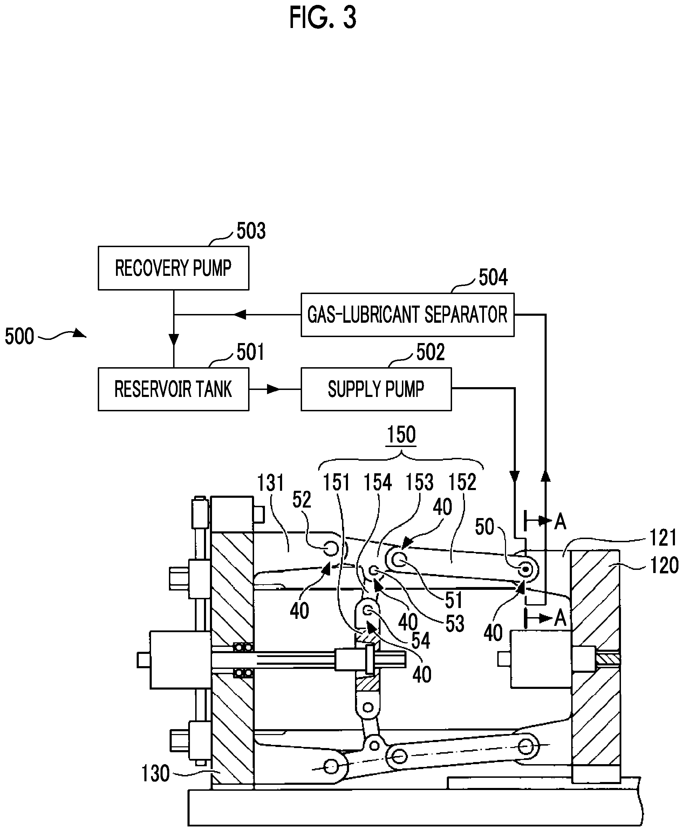

Next, a configuration of supplying a lubricant to a sliding surface of the toggle mechanism 150 will be described with reference to Fig. 3. Fig. 3 is a configuration view of the toggle mechanism 150 and a lubricant supply device 500 included in the injection molding machine 10 according to the first embodiment.

As shown in Fig. 3, a connection portion 40 which connects a bearing 121 of the movable platen 120 and the first link 152 to each other by a connection pin 50 is formed. Similarly, a connection portion 40 which connects the first link 152 and the second link 153 to each other by a connection pin 51 is formed. A connection portion 40 which connects the second link 153 and a bearing 131 of the toggle support 130 to each other by a connection pin 52 is formed. A connection portion 40 which connects the second link 153 and the third link 154 to each other by a connection pin 53 is formed. A connection portion 40 which connects the third link 154 and the crosshead 151 to each other by a connection pin 54 is formed.

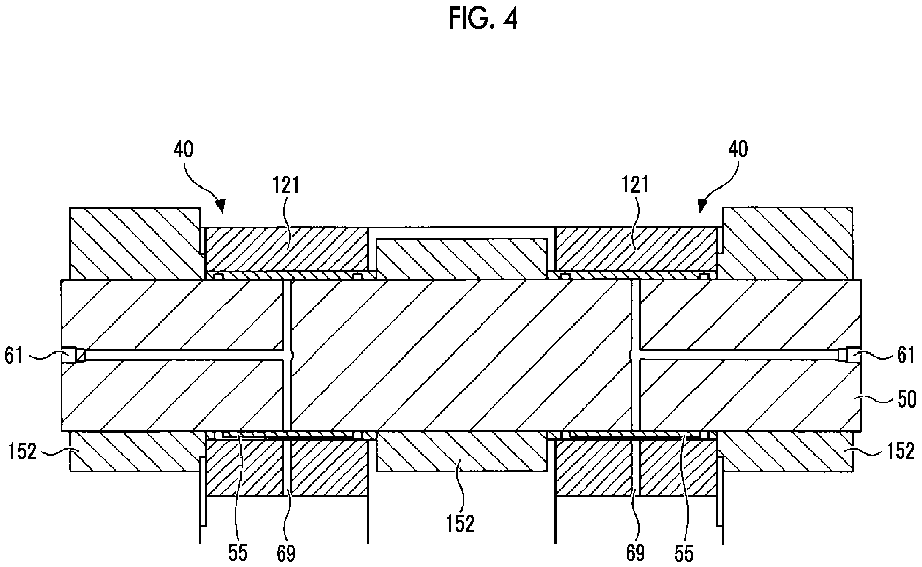

In the connection portion 40 of the connection pin 50, the connection pin 50 is detent-fixed to a bearing hole of the first link 152 which is one connection member, a bush 55 (refer to Fig. 4) is pressure-fitted into the bearing 121 of the movable platen 120 which is the other connection member, and a sliding surface between the bush 55 and the connection pin 50 is lubricated. In addition, the connection pin 50 may be detent-fixed to the bearing hole of the movable platen 120, the bush may be pressure-fitted into the bearing of the first link 152, and the sliding surface between the bush and the connection pin 50 may be lubricated. Similarly, in the connection portions 40 of the connection pins 51 to 54, the connection pins 51 and 54 may be detent-fixed to one connection member, the bushes may be pressure-fitted into the other connection member, and sliding surfaces between the bushes and the connection pins 51 and 54 may be lubricated.

In Fig. 3 and the following descriptions, a configuration of lubricating the sliding surface in the connection portion 40 of the connection pin 50 will be described as an example. The present invention may be applied to configurations of lubricating the sliding surfaces in the connection portions 40 of the other connection pins 51 to 54. In addition, the present invention may be applied to at least one connection portion of the connection portions 40.

The injection molding machine 10 includes the lubricant supply device 500. The lubricant supply device 500 has a reservoir tank 501, a supply pump 502, a recovery pump 503, and a gas-lubricant separator 504. In addition, the lubricant supply device 500 may be independently provided for each connection portion 40 or a flow path may branch off such that the lubricant supply device 500 is commonly used.

The reservoir tank 501 is a container which can store the lubricant. In addition, a type of the lubricant is not particularly limited, and for example, the lubricant may be grease or oil. The supply pump 502 supplies the lubricant from the reservoir tank 501 to supply connection ports 61 (refer to Fig. 4) of the connection portion 40.

The recovery pump 503 are connected to recovery connection ports 69 (refer to Fig. 4) of the connection portion 40 via the gas-lubricant separator 504 and recovers the lubricant by sucking air from the recovery connection ports 69. The lubricant recovered together with the air is separated into the air and the lubricant by the gas-lubricant separator 504, the separated air is sucked by the recovery pump 503, foreign substances of the separated lubricant are removed by a filter (not shown), and the lubricant is returned to the reservoir tank 501. In addition, arrows shown in the flow path of the lubricant supply device 500 indicate flow directions of the lubricant.

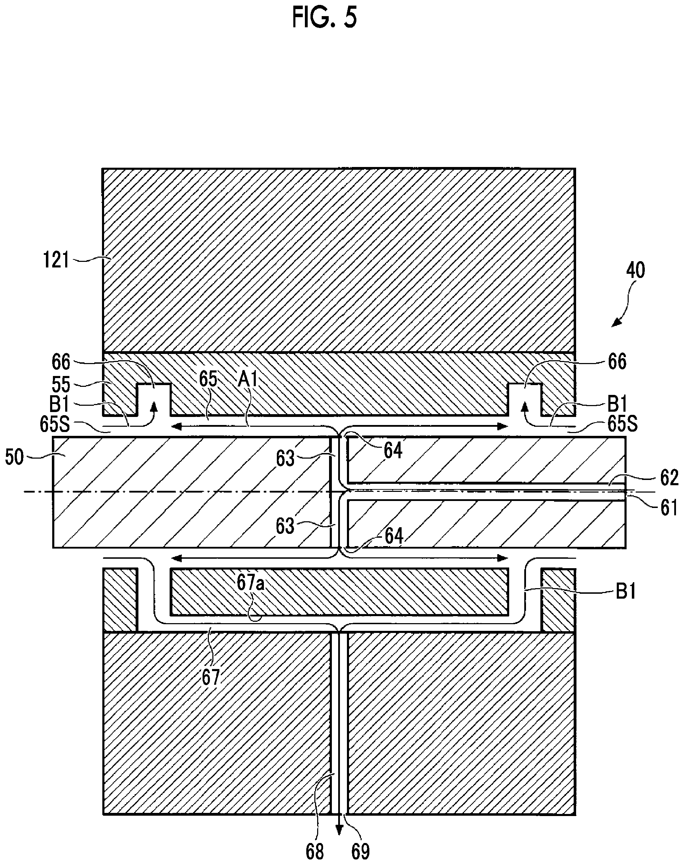

Fig. 4 is a sectional view taken along line A-A of the connection portion 40. Fig. 5 is a sectional schematic view explaining a lubrication structure between the connection pin 50 and the bush 55 in the connection portion 40 of the first embodiment. In addition, in Fig. 5, only one bush 55 of two bushes 55 in Fig. 4 and the connection pin 50 are shown, and the first link 152 is omitted. In addition, in Fig. 5, an axial direction of the connection pin 50 is a right-left direction on a paper surface. Moreover, the axial direction of the connection pin 50 is the Y direction (refer to Fig. 1).

The supply connection port 61 is provided on an end surface of the connection pin 50, and a supply path 62 extending in the axial direction of the connection pin 50 from the supply connection port 61 is provided in the connection pin 50. That is, the supply connection port 61 is provided on one end of the supply path 62. A plurality of supply paths 63 extending in a radial direction of the connection pin 50 are provided on the other end side of the supply path 62, and the other end sides of the supply paths 63 are opened to supply path opening portions 64 provided on an outer peripheral surface of the connection pin 50. A plurality of supply path opening portions 64 are provided in a circumferential direction of the connection pin 50.

In addition, in Figs 4 and 5, a case where two supply paths 63 extending in an upward direction and a downward direction on the paper surface are provided is described as an example. However, the present invention is not limited to this. For example, the supply paths 63 may be provided to extend radially from the supply paths 62 toward the outer peripheral surface of the connection pin 50. In addition, the supply path opening portions 64 are provided to be positioned at an approximately center of the bush 55 in the axial direction of the connection pin 50.

In addition, preferably, a tube diameter of each supply path 63 is a tube diameter capable of holding the lubricant inside the supply path 63 by a capillary phenomenon even in a case where the supply path 63 stands vertically. That is, preferably, based on a material or surface characteristics of the supply path 63, characteristics of the lubricant, a height to the outer peripheral surface of the connection pin 50, or the like, the tube diameter (cross sectional area) of the supply path 63 capable of holding the lubricant inside the supply path 63 by the capillary phenomenon is set. According to this configuration, it is possible to prevent the lubricant from flowing out from the supply paths 63 even in a state where the supply pump 502 stops. In addition, in the state where the supply pump 502 stops, the lubricant supplied to an upper bearing clearance 65 flows to a lower bearing clearance 65 via the supply paths 63, and thus, it is possible to prevent lack of the lubricant.

Moreover, in at least one of the plurality of supply paths 63, it is preferable that the supply path opening portion 64 faces directly upward in a state where the mold clamping force is applied to the injection molding machine 10. According to this configuration, when the mold is clamped in a state where the largest load is applied to the connection pin 50, the lubricant supplied from the supply path opening portions 64 can flow to both side in the circumferential direction of the connection pin 50 by the gravity, and thus, it is possible to appropriately lubricate the sliding surface.

In addition, in at least one of the plurality of supply paths 63, it is preferable that the supply path opening portion 64 faces directly upward in a state where the link of the toggle mechanism 150 extends. According to this configuration, even in the state where the link of the toggle mechanism 150 extends, the lubricant supplied from the supply path opening portions 64 can flow to both side in the circumferential direction of the connection pin 50 by the gravity, and thus, it is possible to appropriately lubricate the sliding surface.

Collection grooves 66 which are ring-shaped grooves are formed on an inner peripheral surface of the bush 55 which is pressure-fitted into the bearing 121 of the movable platen 120. The collection grooves 66 are disposed on both outer sides such that the supply path opening portions 64 are interposed therebetween in the axial direction of the connection pin 50.

The bearing clearance 65 through which the lubricant is supplied is formed between the inner peripheral surface of the bush 55 and the outer peripheral surface of the connection pin 50 between the two collection grooves 66. Moreover, outer bearing clearances 65S are formed between the inner peripheral surface of the bush 55 and the outer peripheral surface of the connection pin 50 on the outside in the axial direction from the collection grooves 66.

Moreover, a recessed groove 67a which connects the two collection grooves 66 to each other is provided on an outer peripheral surface of the bush 55. The bush 55 is pressure-fitted into the bearing 121, and thus, a recovery path 67 is formed between the recessed groove 67a and an inner peripheral surface of the bearing hole of the bearing 121.

A recovery path 68 which communicates from the inner peripheral surface of the bearing hole to an outer peripheral surface thereof is provided in the bearing 121 into which the bush 55 is pressure-fitted. An inner peripheral surface side of the recovery path 68 communicates with the recovery path 67. An outer peripheral surface side of the recovery path 68 becomes the recovery connection port 69. In addition, when the bush 55 is pressure-fitted into the bearing 121, the bush 55 is pressure-fitted such that an inner peripheral surface-side opening portion of the recovery path 68 faces the recessed groove 67a of the bush 55, and the recovery path 67 and the recovery path 68 can communicate with each other.

Next, a flow of the lubricant will be described. The lubricant supplied from the supply connection port 61 by the supply pump 502 flows through the supply path 62 as shown by an arrow A1, branches off so as to flow through the plurality of supply paths 63, and is supplied to the plurality of supply path opening portions 64 formed on the outer peripheral surface of the connection pin 50. In addition, the lubricant supplied from the supply path opening portions 64 flows from the supply path opening portions 64 to the collection grooves 66 through the bearing clearance 65 which is the clearance between the inner peripheral surface of the bush 55 and the outer peripheral surface of the connection pin 50, and thus, the lubricant lubricates the sliding surfaces of the bush 55 and the connection pin 50.

Apressure inside each collection groove 66 is more negative than a pressure of an external space by an operation of the recovery pump 503. Accordingly, a flow of air from the external space toward the collection groove 66 is generated in the outer bearing clearance 65S, and thus, even when a seal member or the like is not used in the outer bearing clearance 65S, it is possible to prevent the lubricant from flowing to the external space via the outer bearing clearance 65S.

In addition, as shown by arrows B1, the air flowing from the external space into the collection grooves 66 via the outer bearing clearances 65S is sucked from the recovery connection port 69 through the recovery path 67 and the recovery path 68 to the recovery pump 503 via the gas-lubricant separator 504. In addition, the lubricant flowing from the bearing clearance 65 into the collection grooves 66 flows into the gas-lubricant separator 504 from the recovery connection port 69 through the recovery path 67 and the recovery path 68 by the flows of the air shown by the arrows B1. Thereafter, foreign substances of the lubricant separated from the air by the gas-lubricant separator 504 are removed by a filter (not shown), and the lubricant is returned to the reservoir tank 501.

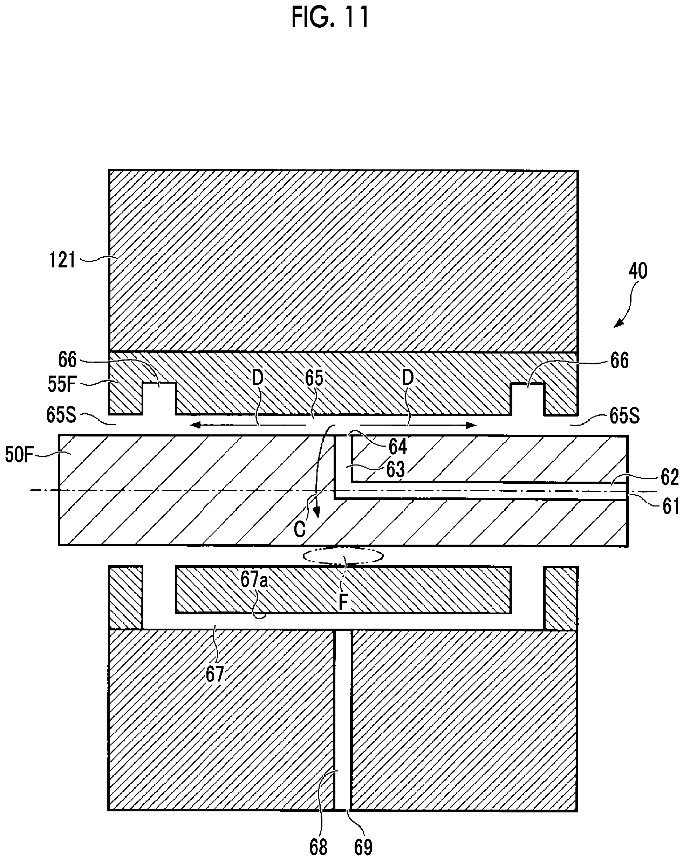

Here, a lubrication structure of an injection molding machine according to a reference example will be described with reference to Fig. 11. Fig. 11 is a sectional schematic view explaining a lubrication structure between a connection pin 50F and a bush 55F in a connection portion 40 of the reference example. In the reference example, only one supply path 63 extending in a radial direction of the connection pin 50F is provided, and only one supply path opening portion 64 is provided. Other configurations are similar to those of the first embodiment, and overlapping descriptions thereof are omitted.

Hereinafter, compared to the reference example, operation effects of the injection molding machine 10 according to the first embodiment will be described.

The toggle mechanism 150 is a mechanism in which the first link 152 oscillates with respect to the bearing 121 of the movable platen 120, and thus, the supply path opening portion 64 does not rotate 360° with respect to the inner peripheral surface of the bush 55 but reciprocates within a predetermined range in the circumferential direction. In addition, the pressure inside the collection groove 66 is a negative pressure by the recovery pump 503. Accordingly, the lubricant supplied from the supply path opening portion 64 to the bearing clearance 65 more easily flows (flow in the axial direction of the connection pin 50) from a center side of the bush 55 on which the supply path opening portion 64 is provided to both outer sides on which the collection grooves 66 are provided, as shown in an arrow D, than in the circumferential direction of the connection pin 50 as shown by an arrow C.

Accordingly, in the lubrication structure of the injection molding machine according to the reference example, the lubricant is supplied from one supply path opening portion 64 to the bearing clearance 65, and thus, there is a concern that a portion (for example, a region F shown in Fig. 11) in which the lubricant hardly spreads is formed at a position away from the supply path opening portions 64 in a circumferential direction of the connection pin 50F.

Meanwhile, according to the lubrication structure of the injection molding machine 10 of the first embodiment, the plurality of supply path opening portions 64 through which the lubricant is supplied to the bearing clearance 65 are formed in the circumferential direction of the connection pin 50, the sliding surface can be sufficiently lubricated, and it is possible to suppress wear caused by a distribution failure of the lubricant. That is, the plurality of supply path opening portions 64 constitute a circumferential supply promotion mechanism which promotes the supply of the lubricant supplied from the supply path opening portions 64 to the bearing clearance 65, in the circumferential direction of the connection pin 50.

In addition, the recovery pump 503 sucks the lubricant flowing from the bearing clearance 65 into the collection grooves 66 and sucks the air flowing from the outer bearing clearances 65S outside the collection grooves 66 into the collection grooves 66, and thus, the pressure inside each collection groove 66 is more negative than the pressure of the external pressure. Accordingly, it is possible to decrease leakage of the lubricant without disposing a seal member or the like in the outer bearing clearances 65S, and it is possible to improve cleanliness and maintainability of the injection molding machine 10.

### <<Second Embodiment>>

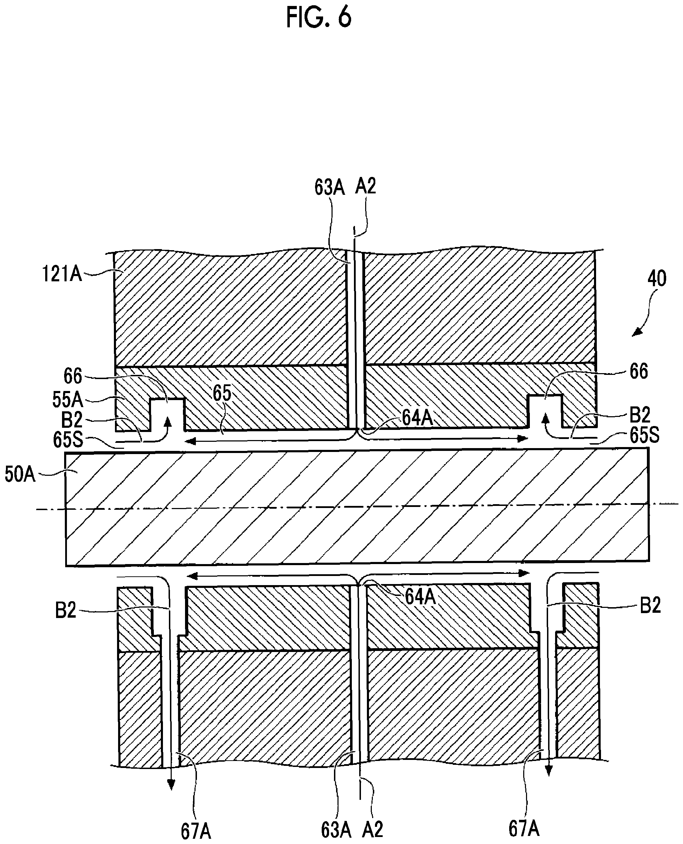

A lubrication structure of an injection molding machine according to a second embodiment, which does not form part of the present invention, will be described with reference to Fig. 6. Fig. 6 is a sectional schematic view explaining a lubrication structure between a connection pin 50A and a bush 55A in a connection portion 40 of the second embodiment. Compared to the injection molding machine 10 according to the first embodiment, in the injection molding machine according to the second embodiment (and third to sixth embodiments described later), a lubrication structure of the bearing clearance 65 in the toggle mechanism 150 is different. Other configurations are similar, and overlapping descriptions are omitted.

As shown in Fig. 5, in the first embodiment, the supply paths 62 and 63 are provided in the connection pin 50. Meanwhile, in the second embodiment, as shown in Fig. 6, a plurality of supply paths 63A are provided in the bearing 121A and the bush 55A, and a plurality of supply path opening portions 64A are provided on an inner peripheral surface of the bush 55A.

Next, a flow of a lubricant will be described. The lubricant supplied from the supply connection port provided in the movable platen 120 by the supply pump 502 branches off so as to flow through the plurality of supply paths 63A, as shown by arrows A2, and is supplied to the plurality of supply path opening portions 64A formed on an inner peripheral surface of the bush 55A. In addition, the lubricant supplied from the supply path opening portions 64A flows from the supply path opening portions 64A to the collection grooves 66 through the bearing clearance 65 which is the clearance between the inner peripheral surface of the bush 55A and an outer peripheral surface of the connection pin 50A, and thus, the lubricant lubricates the sliding surfaces of the bush 55A and the connection pin 50A. That is, the plurality of supply path opening portions 64A constitute a circumferential supply promotion mechanism which promotes the supply of the lubricant supplied from the supply path opening portion 64A to the bearing clearance 65, in the circumferential direction of the connection pin 50A.

In addition, a pressure inside each collection groove 66 is more negative than the pressure of the external space by the operation of the recovery pump 503. As shown by arrows B2, the air flowing from the external space into the collection grooves 66 via the outer bearing clearances 65S due to the negative pressure is sucked from the recovery connection port provided in the movable platen 120 through the recovery paths 67A to the recovery pump 503 via the gas-lubricant separator 504. In addition, the lubricant flowing from the bearing clearance 65 into the collection grooves 66 flows into the gas-lubricant separator 504 from the recovery connection port through the recovery paths 67A by the flow of the air, as shown by the arrows B2. Thereafter, foreign substances of the lubricant separated from the air by the gas-lubricant separator 504 are removed by a filter (not shown), and the lubricant is returned to the reservoir tank 501.

As described above, according to the lubrication structure of the injection molding machine of the second embodiment, the plurality of supply path opening portions 64A which supply the lubricant to the bearing clearance 65 are provided in the circumferential direction of the connection pin 50A, and thus, similarly to the first embodiment, the sliding surface can be sufficiently lubricated, and it is possible to suppress wear caused by a distribution failure of the lubricant.

### <<Third Embodiment>>

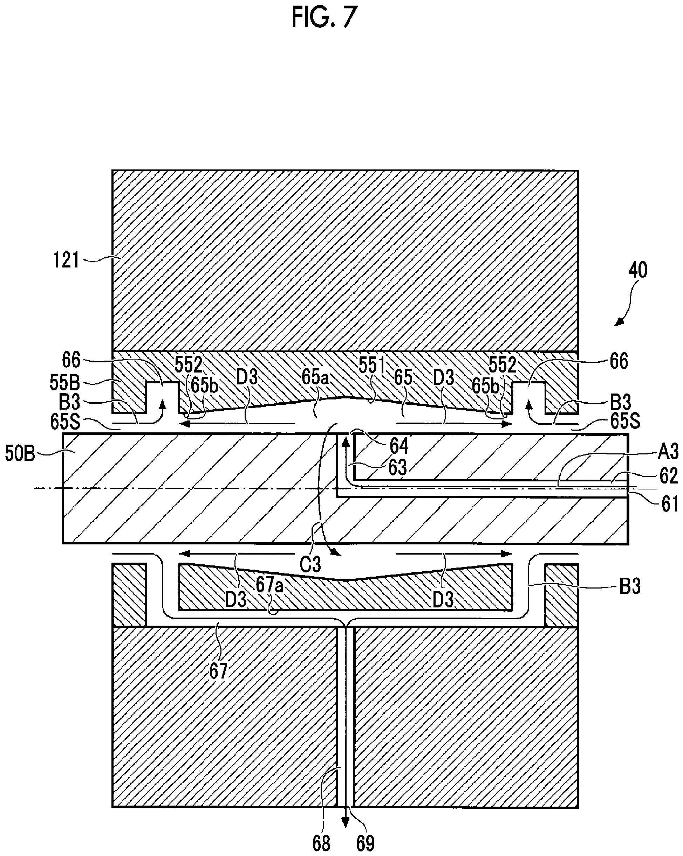

A lubrication structure of an injection molding machine according to a third embodiment will be described with reference to Fig. 7. Fig. 7 is a sectional schematic view explaining a lubrication structure between a connection pin 50B and a bush 55B in a connection portion 40 of the third embodiment.

The connection pin 50B according to the third embodiment has only one supply path opening portion 64 similarly the connection pin 50E according to the reference example shown in Fig. 11.

The bush 55B has an enlarged diameter portion 551 whose inner diameter increases in the vicinity of a center of the bush 55B in an axial direction and reduced diameter portions 552 which are disposed (the collection groove 66 side in the axial direction) outside the enlarged diameter portion 551 and have inner diameter smaller than that of the enlarged diameter portion 551. In other words, in the bush 55B, the reduced diameter portions 552 are formed axially inside the collection grooves 66, and the enlarged diameter portion 551 which is the recessed portion is provided axially inside the reduced diameter portions 552. In addition, the case where the enlarged diameter portion 551 which is the recessed portion is provided in a ring shape is described. However, the enlarged diameter portion 551 may be provided partially in the circumferential direction. Accordingly, the bearing clearance 65 has an enlarged gap portion 65a in which a clearance increases in the vicinity of the center of the bush 55B in the axial direction and reduced gap portions 65b which are disposed outside the enlarged gap portion 65a in the axial direction and have a clearance smaller than that of the enlarged gap portion 65a.

The supply path opening portion 64 of the connection pin 50B is disposed to face the enlarged diameter portion 551 of the bush 55B. In other words, the supply path opening portion 64 faces the enlarged gap portion 65a so as to be connected to the enlarged gap portion 65a.

Next, a flow of the lubricant will be described. The lubricant supplied from the supply connection port 61 by the supply pump 502 flows through the supply path 62 and the supply path 63 as shown by an arrow A3, and is supplied to the supply path opening portion 64 which is formed on a circumferential surface of the connection pin 50.

Here, the lubricant supplied from the supply path opening portion 64 to the bearing clearance 65 flows from a center side (supply path opening portion 64 side) to both outer sides (collection grooves 66 sides) as shown by arrows D3. However, the enlarged gap portion 65a is formed in front of the reduced gap portions 65b. Accordingly, as shown by an arrow C3, the lubricant is easily turned also in the circumferential direction of the connection pin 50. Accordingly, the sliding surface can be sufficiently lubricated, and it is possible to suppress wear caused by a distribution failure of the lubricant. That is, the enlarged gap portion 65a constitute a circumferential supply promotion mechanism which promotes the supply of the lubricant supplied from the supply path opening portion 64 to the bearing clearance 65, in the circumferential direction of the connection pin 50B.

In addition, a pressure inside each collection groove 66 is more negative than the pressure of the external space by the operation of the recovery pump 503. As shown by arrows B3, the air flowing from the external space into the collection grooves 66 via the outer bearing clearances 65S due to the negative pressure is sucked from the recovery connection port 69 through the recovery path 67 and the recovery path 68 to the recovery pump 503 via the gas-lubricant separator 504. In addition, the lubricant flowing from the bearing clearance 65 into the collection grooves 66 flows into the gas-lubricant separator 504 from the recovery connection port 69 through the recovery paths 67 and the recovery path 68 by the flow of the air, as shown by the arrows B3. Thereafter, foreign substances of the lubricant separated from the air by the gas-lubricant separator 504 are removed by a filter (not shown), and the lubricant is returned to the reservoir tank 501.

As described above, according to the lubrication structure of the injection molding machine of the third embodiment, the lubricant can be easily turned also in the circumferential direction of the connection pin 50 in the enlarged gap portion 65a, and thus, similarly to the first embodiment, the sliding surface can be sufficiently lubricated, and it is possible to suppress wear caused by a distribution failure of the lubricant.

### <<Fourth Embodiment>>

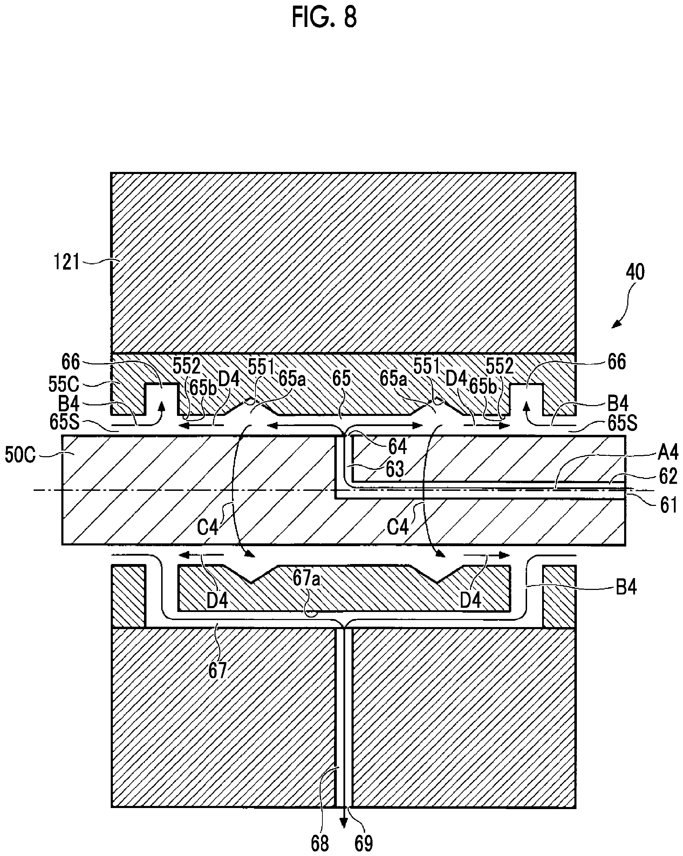

A lubrication structure of an injection molding machine according to a fourth embodiment will be described with reference to Fig. 8. Fig. 8 is a sectional schematic view explaining a lubrication structure between a connection pin 50C and a bush 55C in a connection portion 40 of the fourth embodiment.

The connection pin 50C according to the fourth embodiment has one supply path opening portion 64 similarly to the connection pin 50B according to the third embodiment shown Fig. 7.

The bush 55C has two enlarged diameter portions 551 and reduced diameter portions 552 which are disposed outside (collection grooves 66 sides in the axial direction) the enlarged diameter portions 551 and have inner diameters smaller than those of the enlarged diameter portions 551. In other words, in the bush 55C, the reduced diameter portions 552 are formed axially inside the collection grooves 66, and the enlarged diameter portions 551 which are recessed portions are provided axially inside the reduced diameter portions 552. In addition, the case where the enlarged diameter portions 551 which are the recessed portions are provided in ring shapes is described. However, each enlarged diameter portion 551 may be provided partially in the circumferential direction. Accordingly, the bearing clearance 65 has enlarged gap portions 65a in which a clearance increases in the vicinity of the center of the bush 55C in the axial direction and reduced gap portions 65b which are disposed outside the enlarged gap portions 65a in the axial direction and have a clearance smaller than those of the enlarged gap portions 65a.

Next, a flow of a lubricant will be described. As shown by an arrow A4, the lubricant supplied from the supply connection port 61 by the supply pump 502 flows through the supply path 62 and the supply path 63 and is supplied to the supply path opening portion 64 formed on the outer peripheral surface of the connection pin 50.

Here, the lubricant supplied from the supply path opening portion 64 to the bearing clearance 65 flows from a center side (supply path opening portion 64 side) to both outer sides (collection grooves 66 sides) as shown by arrows D4. However, the enlarged gap portions 65a are formed in front of the reduced gap portions 65b. Accordingly, as shown by arrows C4, the lubricant is easily turned also in the circumferential direction of the connection pin 50. Accordingly, the sliding surface can be sufficiently lubricated, and it is possible to suppress wear caused by a distribution failure of the lubricant. That is, the enlarged gap portion 65a constitute a circumferential supply promotion mechanism which promotes the supply of the lubricant supplied from the supply path opening portion 64 to the bearing clearance 65, in the circumferential direction of the connection pin 50C.

In addition, a pressure inside each collection groove 66 is more negative than the pressure of the external space by the operation of the recovery pump 503. As shown by arrows B4, the air flowing from the external space into the collection grooves 66 via the outer bearing clearances 65S due to the negative pressure is sucked from the recovery connection port 69 through the recovery path 67 and the recovery path 68 to the recovery pump 503 via the gas-lubricant separator 504. In addition, the lubricant flowing from the bearing clearance 65 into the collection grooves 66 flows into the gas-lubricant separator 504 from the recovery connection port 69 through the recovery paths 67 and the recovery path 68 by the flow of the air, as shown by the arrows B4. Thereafter, foreign substances of the lubricant separated from the air by the gas-lubricant separator 504 are removed by a filter (not shown), and the lubricant is returned to the reservoir tank 501.

As described above, according to the lubrication structure of the injection molding machine of the fourth embodiment, the lubricant can be easily turned also in the circumferential direction of the connection pin 50 in the enlarged gap portions 65a, and thus, similarly to the first embodiment, the sliding surface can be sufficiently lubricated, and it is possible to suppress wear caused by a distribution failure of the lubricant.

Moreover, in the third embodiment shown in Fig. 7 and the fourth embodiment shown in Fig. 8, each of the connection pins 50B and 50C has one supply path opening portion 64. However, the present invention is not limited to this, and similarly to the connection pin 50 of the first embodiment, each of the connection pins 50B and 50C may have the plurality of supply path opening portions 64. Therefore, it is possible to further improve the lubricity. Moreover, like the second embodiment, the supply path through which the lubricant is supplied to the bearing clearance 65 may be formed on the bush side.

Moreover, in the third embodiment shown in Fig. 7 and the fourth embodiment shown in Fig. 8, the enlarged diameter portion 551 (enlarged gap portion 65a) of each of the bushes 55B and 55C is provided over the entire periphery of each bush in the circumferential direction of the connection pin. However, the present invention is not limited to this, and the enlarged diameter portion 551 (enlarged gap portion 65a) may be partially provided in the circumferential direction.

### <<Fifth Embodiment>>

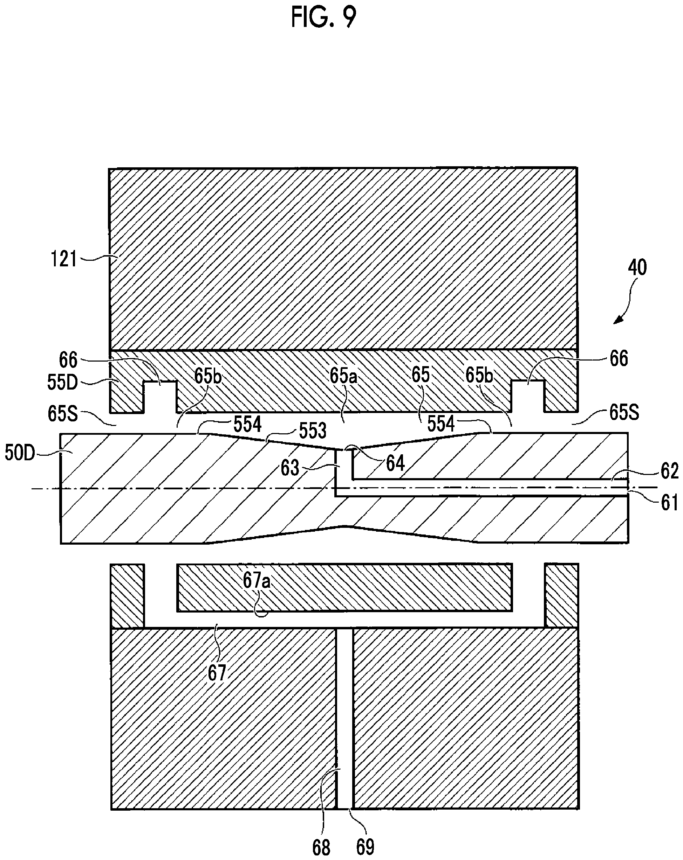

A lubrication structure of an injection molding machine according to a fifth embodiment will be described with reference to Fig. 9. Fig. 9 is a sectional schematic view explaining a lubrication structure between a connection pin 50D and a bush 55D in a connection portion 40 of the fifth embodiment.

In the third and fourth embodiments, the enlarged diameter portions 551 and the reduced diameter portions 552 are provided on the inner peripheral surfaces of the bushes 55B and 55C, and thus, the enlarged gap portions 65a and the reduced gap portions 65b are formed in the bearing clearances 65. Meanwhile, in the fifth embodiment, a reduced diameter portions 553 whose outer diameter is reduced and enlarged diameter portions 554 whose outer diameters increase are provided on an outer peripheral surface of the connection pin 50D, and thus, an enlarged gap portion 65a and reduced gap portions 65b are formed in the bearing clearance 65. In other words, in the connection pin 50D, the enlarged diameter portions 554 are formed axially inside the collection grooves 66, and the reduced diameter portions 553 which are the recessed portions are provided axially inside the enlarged diameter portions 554. That is, the enlarged gap portion 65a constitute a circumferential supply promotion mechanism which promotes the supply of the lubricant supplied from the supply path opening portion 64 to the bearing clearance 65, in the circumferential direction of the connection pin 50D.

According to the fifth embodiment, it is possible to obtain operation effects similar to those of the third embodiment. In addition, the outer peripheral surface is processed, and thus, compared to the third embodiment in which the inner peripheral surface is processed. The fifth embodiment have better workability.

Moreover, in the embodiment shown in Fig. 9, like the third embodiment, one enlarged gap portion 65a is formed. However, the present invention is not limited to this, like the fourth embodiment, the plurality of enlarged gap portions 65a may be formed.

### <<Sixth Embodiment>>

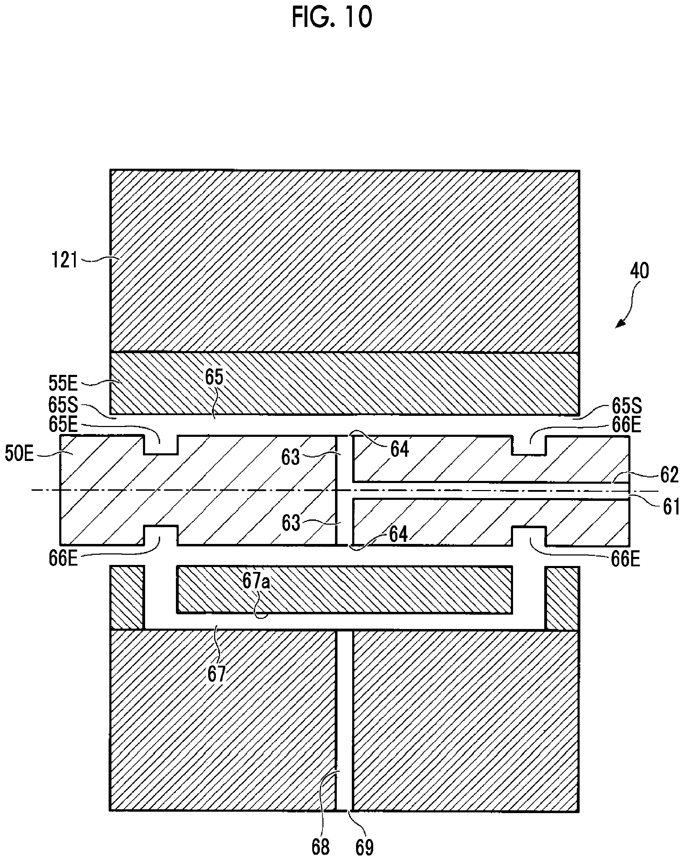

A lubrication structure of an injection molding machine according to a sixth embodiment will be described with reference to Fig. 10. Fig. 10 is a sectional schematic view explaining a lubrication structure between a connection pin 50E and a bush 55E in a connection portion 40 of the sixth embodiment.

While the collection grooves 66 are formed in the bush 55 in the lubrication structure of the first embodiment shown in Fig. 5, in the sixth embodiment shown in Fig. 10, collection grooves 66E are formed on an outer peripheral surface of the connection pin 50E. In addition, the plurality of supply path opening portions 64 constitute a circumferential supply promotion mechanism which promotes the supply of the lubricant supplied from the supply path opening portions 64 to the bearing clearance 65, in the circumferential direction of the connection pin 50E. Also in this configuration, it is possible to obtain operation effects similar to those of the first embodiment.

Moreover, in Fig. 10, the collection grooves 66E are formed on the connection pin 50E side in the configuration of the first embodiment. However, the present invention is not limited to this, and the collection groove may be formed on the connection pin also in the second to fifth embodiments. In addition, a ring-shaped recessed groove may be provided on each of the bush and the connection pin so as to form the collection groove. Also in this configuration, similar operation effects can be obtained.

### <Seventh Embodiment>

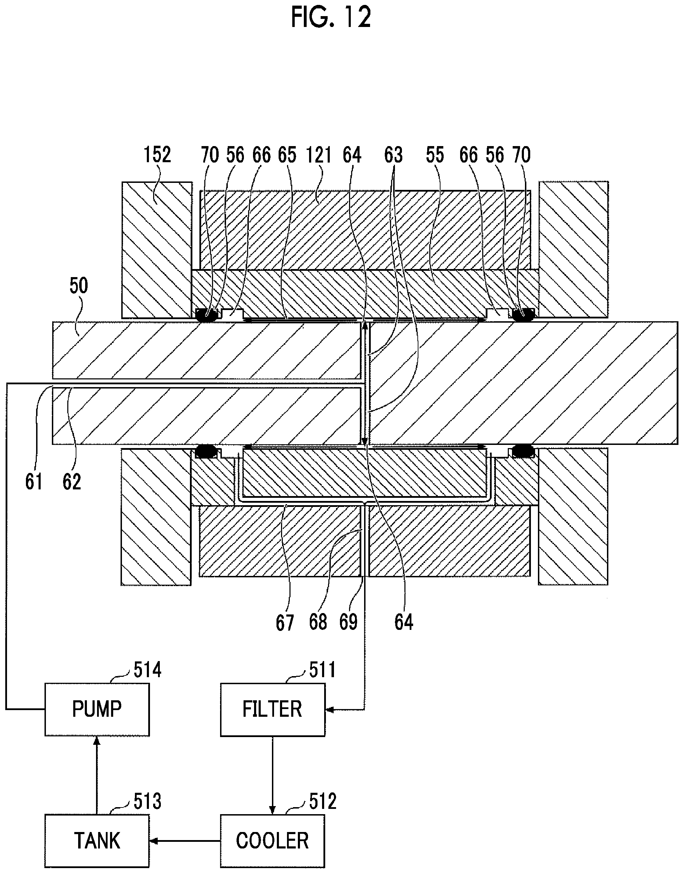

Next, a lubrication structure of an injection molding machine according to a seventh embodiment will be described with reference to Fig. 12. Fig. 12 is a sectional schematic view explaining a lubrication structure between a connection pin and a bush in a connection portion of the seventh embodiment.

Here, in the injection molding machines according to the first to sixth embodiments, the recovery pump 503 is operated such that air is sucked from the clearance between the outer bearing clearance 65S and the connection pin 50, and thus, the leakage of the lubricant is prevented. Meanwhile, in the injection molding machine according to the seventh embodiment, both sides of the bearing clearance 65 are sealed by O rings (seal members) 70 provided in seal grooves 56, and thus, the leakage of the lubricant is prevented.

A lubricant supply device of the injection molding machine according to the seventh embodiment has a filter 511, a cooler 512, tank 513, and a pump 514. In addition, the lubricant supply device may be independently provided for each connection portion, or a flow path may branch off and may be shared. The foreign substances of the lubricant discharged from the recovery connection port 69 are removed by the filter 511, and the lubricant is cooled by the cooler 512 and stored in the tank 513. The pump 514 supplies the lubricant from the tank 513 to the supply connection port 61 of the connection portion.

In addition, in the lubrication structure of the injection molding machine according to the seventh embodiment, the plurality of supply path opening portions 64 which supply the lubricant to the bearing clearance 65 are provided in the circumferential direction of the connection pin 50. Accordingly, the sliding surface can be sufficiently lubricated, and it is possible to suppress wear caused by a distribution failure of the lubricant. That is, the plurality of supply path opening portions 64 constitute a circumferential supply promotion mechanism which promotes the supply of the lubricant supplied from the supply path opening portions 64 to the bearing clearance 65, in the circumferential direction of the connection pin 50.

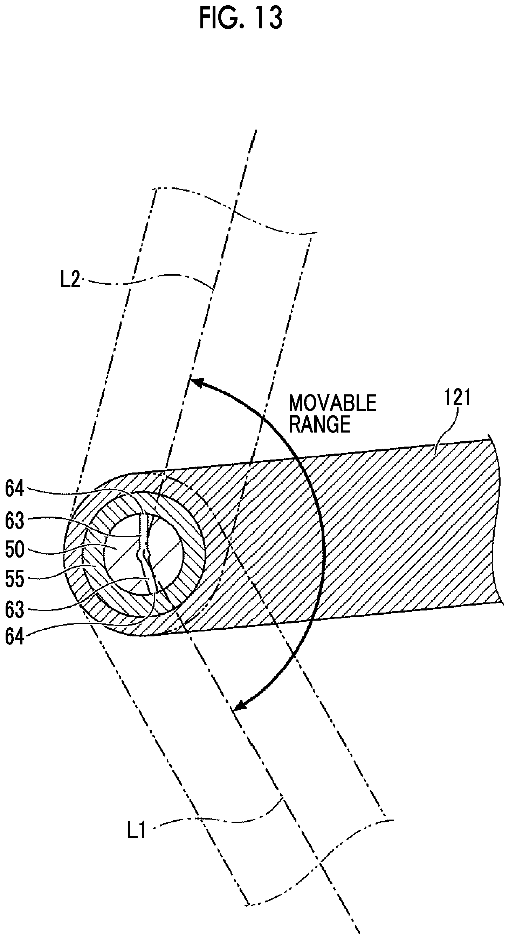

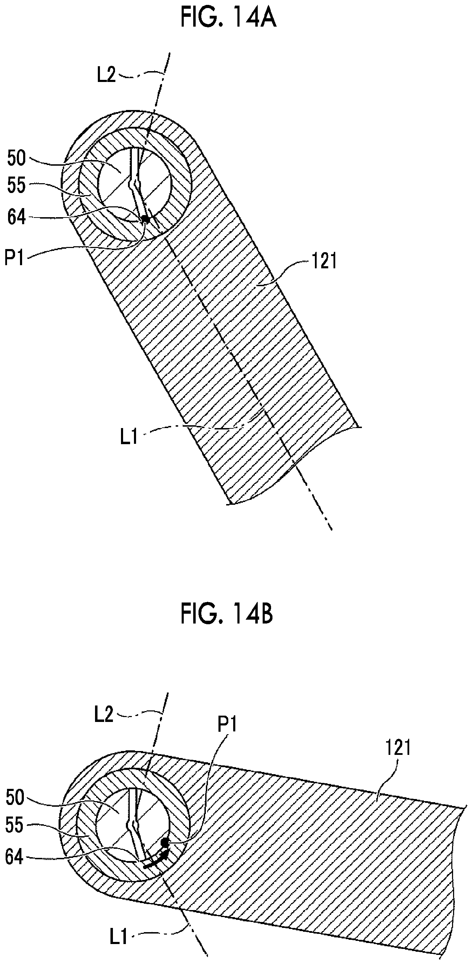

Here, dispositions of the supply path opening portions 64 will be described with reference Figs. 13 to 14B. Fig. 13 is a sectional schematic view explaining a movable range in the connection portion of the seventh embodiment. Figs. 14A and 14B are views showing an operation in the connection portion of the seventh embodiment. Moreover, Figs. 13 to 14B are sectional views taken along a plane having the axial direction of the connection pin 50 as a normal. In addition, a movement of the bearing 121 based on the connection pin 50 is relatively shown.

As shown in Fig. 13, the bearing 121 is operated in a predetermined movable range shown from a movable range end L1 to a movable range end L2. In addition, in a process from the mold closing process to the mold clamping process, a range in which the force is applied to a portion between the connection pin 50 and the bush 55 also is within a range from L1 to L2.

As shown in Fig. 13, the plurality of (two in Fig. 13) supply path opening portions 64 are provided and disposed to sandwich the movable range (L1 to L2) of the connection portion. In other words, the supply path opening portions 64 are provided outside the movable range (L1 to L2). In addition, it is preferable that the supply path opening portions 64 are close to the movable range ends L1 and L2. In addition, a distance from one supply path opening portion 64 (the side close to the movable range end L1) from the movable range end L1 and a distance from the movable range end L2 to the other supply path opening portion 64 (the side close to the movable range end L2) are the same as each other.

In Figs. 14A and 14B, a case in which the bearing 121 rotates in the counterclockwise direction from a state where the bearing 121 is positioned on the movable range end L1 is described as an example. As shown in Fig. 14A, the lower supply path opening portion 64 supplies the lubricant at a position indicated by a point P1 of the bush 55. If the bearing 121 rotates in the counterclockwise direction, the bush 55 which is pressure-fitted into the bearing 121 also rotates together with the bearing 121. Accordingly, as shown in Fig. 14B, the point P1 also moves in the counterclockwise direction. Therefore, as shown by an arrow, the lubricant can be supplied from the supply path opening portion 64 to the portion between the connection pin 50 and the bush 55. That is, in the process form the mold closing process to the mold clamping process, the lubricant can be appropriately supplied to the range from the movable range end L1 to the movable range end L2 in which the force is applied to the portion between the connection pin 50 and the bush 55.

In addition, although not shown, even in a case in which the bearing 121 rotates in the clockwise direction from a state where the bearing 121 is positioned on the movable range end L2, similarly, the lubricant can be supplied from the upper supply path opening portion 64 to the portion between the connection pin 50 and the bush 55.

Accordingly, during the mold clamping process, it is possible to more appropriately supply the lubricant to a portion in which the connection pin 50 and the bush 55 are strongly pressed to each other.

In addition, in the lubrication structure of the injection molding machine according to the seventh embodiment, the structure in which the leakage of the lubricant is prevented by the O ring (seal member) 70 is described as an example. However, the present embodiment is not limited to this, and this structure may be applied to the lubrication structure of the injection molding machine according to the first embodiment. In the connection portion 40 shown in Fig. 5, as shown in Fig. 13, the supply path opening portions 64 may be disposed to include the movable range (L1 to L2) of the connection portion. Accordingly, during the mold clamping process, it is possible to more appropriately supply the lubricant to the portion in which the connection pin 50 and the bush 55 are strongly pressed to each other.

Hereinbefore, the embodiments of the injection molding machine or the like are described. However, the present inve ntion is not limited to the above-described embodiments or th e like, and various modifications and improvements can be mad e within the scope of the present invention describ ed in claims.

### Brief Description of the Reference Symbols

10: injection molding machine
40: connection portion
50 to 54: connection pin
55: bush
56: seal groove
61: supply connection port
62, 63: supply path
64: supply path opening portion (circumferential supply promotion mechanism)
65: bearing clearance
65S: outer bearing clearance
65a: enlarged gap portion (circumferential supply promotion mechanism)
65b: reduced gap portion
66: collection groove
67, 68: recovery path (discharge path)
69: recovery connection port
70: O ring (seal member)
120: movable platen
121: bearing
130: toggle support (rear platen)
131: bearing
150: toggle mechanism (link mechanism)
151: crosshead (link)
152: first link (link)
153: second link (link)
154: third link (link)
500: lubricant supply device
501: reservoir tank
502: supply pump
503: recovery pump (discharge mechanism)
504: gas-lubricant separator
511: filter
512: cooler
513: tank
514: pump
551: enlarged diameter portion (recessed portion)
552: reduced diameter portion
553: reduced diameter portion (recessed portion)
554: enlarged diameter portion

## Claims

1. An injection molding machine (10) comprising:
a toggle mechanism (150) which connects a movable platen (120) and a rear platen (130) to each other,
wherein the toggle mechanism (150) includes
a plurality of links (151, 152, 153, 154),
a first connectionportion which connects the movable platen (120) and the link (151, 152, 153, 154) to each other,
a second connection portion which connects the links (151, 152, 153, 154) to each other, and
a third connection portion which connects the rear platen (130) and the link (151, 152, 153, 154) to each other, **characterized in that**
at least one connection portion (40) of the first to third connection portions includes
a bush (55),
a connection pin (50, 51, 52, 53, 54) which is inserted into the bush (55),
a supply path (62, 63) through which a lubricant is supplied to a bearing clearance (65) which is a clearance between the bush (55) and the connection pin (50, 51, 52, 53, 54),
a discharge path (67, 68) through which the lubricant is discharged from the bearing clearance (65), and
a circumferential supply promotion mechanism which promotes a supply of the lubricant supplied from an opening portion (64) on the bearing clearance (65) side of the supply path (62, 63) to the bearing clearance (65), in a circumferential direction of the connection pin (50, 51, 52, 53, 54),
the circumferential supply promotion mechanism is a plurality of the supply path opening portions (64) which are provided in the circumferential direction of the connection pin (50, 51, 52, 53, 54), and
the supply path opening portions (64) are provided on an outer peripheral surface of the connection pin (50, 51, 52, 53, 54) and are provided to sandwich a movable range of the connection portion when viewed in the circumferential direction of the connection pin (50, 51, 52, 53, 54).

2. The injection molding machine (10) according to claim 1,
wherein the circumferential supply promotion mechanism is an enlarged gap portion (65a) which is provided in the bearing clearance (65), and
wherein a reduced gap portion (65b) having a clearance smaller than that of the enlarged gap portion (65a) is positioned on each of both outer sides of the enlarged gap portion (65a) in an axial direction of the connection pin (50, 51, 52, 53, 54) .

3. The injection molding machine (10) according to claim 2,
wherein a recessed portion (551) is provided on an inner peripheral surface of the bush (55) such that the enlarged gap portion (65a) is formed.

4. The injection molding machine (10) according to claim 2 or 3,
wherein a recessed portion (553) is provided on an outer peripheral surface of the connection pin (50, 51, 52, 53, 54) such that the enlarged gap portion (65a) is formed.

5. The injection molding machine (10) according to claim 1, further comprising:
a seal member which seals the bearing clearance (65).

6. The injection molding machine (10) according to any one of claims 1 to 4, further comprising:
a discharge mechanism (503) which is connected to the discharge path (67, 68) to discharge the lubricant.

7. The injection molding machine (10) according to any one of claims 1 to 6,
wherein the supply path (62, 63) is formed on the connection pin (50, 51, 52, 53, 54).

8. The injection molding machine (10) according to any one of claims 1 to 7,
wherein a collection groove (66) which communicates with the discharge path (67, 68) is provided on an inner peripheral surface of the bush (55).

9. The injection molding machine according to any one of claims 1 to 8,
wherein a collection groove (66) which communicates with the discharge path (67, 68) is provided on an outer peripheral surface of the connection pin (50, 51, 52, 53, 54).

## Patentansprüche

1. Spritzgießmaschine (10), umfassend:
einen Kniehebelmechanismus (150), der eine bewegliche Platte (120) und eine hintere Platte (130) miteinander verbindet,
wobei der Kniehebelmechanismus (150) umfasst:
mehrere Bindeglieder (151, 152, 153, 154),
einen ersten Verbindungsabschnitt, der die bewegliche Platte (120) und das Bindeglied (151, 152, 153, 154) miteinander verbindet,
einen zweiten Verbindungsabschnitt, der die Bindeglieder (151, 152, 153, 154) miteinander verbindet, und
einen dritten Verbindungsabschnitt, der die hintere Platte (130) und das Bindeglied (151, 152, 153, 154) miteinander verbindet, **dadurch gekennzeichnet, dass**
mindestens ein Verbindungsabschnitt (40) der ersten bis dritten Verbindungsabschnitte umfasst
eine Buchse (55),
einen Verbindungsstift (50, 51, 52, 53, 54), der in die Buchse (55) eingeführt ist,
einen Zuführweg (62, 63), durch den ein Schmiermittel an einen Lagerspalt (65), welcher ein Spalt zwischen der Buchse (55) und dem Verbindungsstift (50, 51, 52, 53, 54) ist, zugeführt wird,
einen Ausleitungsweg (67, 68), durch den das Schmiermittel aus dem Lagerspalt (65) ausgeleitet wird, und
einen Umfangszufuhr-Unterstützungsmechanismus, der eine Zufuhr des Schmiermittels, das aus einem Öffnungsabschnitt (64) auf der Seite des Lagerspalts (65) des Zuführwegs (62, 63) an den Lagerspalt (65) zugeführt wird, in einer Umfangsrichtung des Verbindungsstifts (50, 51, 52, 53, 54) unterstützt,
wobei der Umfangszufuhr-Unterstützungsmechanismus mehrere der Zuführwegöffnungsabschnitte (64) ist, die in der Umfangsrichtung des Verbindungsstifts (50, 51, 52, 53, 54) vorgesehen sind, und
die Zuführwegöffnungsabschnitte (64) an einer Außenumfangsfläche des Verbindungsstifts (50, 51, 52, 53, 54) vorgesehen sind und derart vorgesehen sind, dass sie einen Bewegungsbereich des Verbindungsabschnitts, wenn in der Umfangsrichtung des Verbindungsstifts (50, 51, 52, 53, 54) gesehen, sandwichartig umschließen.

2. Spritzgießmaschine (10) nach Anspruch 1,
wobei der Umfangszufuhr-Unterstützungsmechanismus ein vergrößerter Spaltabschnitt (65a) ist, der in dem Lagerspalt (65) vorgesehen ist, und
wobei ein verkleinerter Spaltabschnitt (65b) mit einem Spalt, der kleiner als jener des vergrößerten Spaltabschnitts (65a) ist, an jeder von beiden Außenseiten des vergrößerten Spaltabschnitts (65a) in einer Axialrichtung des Verbindungsstifts (50, 51, 52, 53, 54) positioniert ist.

3. Spritzgießmaschine (10) nach Anspruch 2,
wobei ein ausgesparter Abschnitt (551) an einer Innenumfangsfläche der Buchse (55) derart vorgesehen ist, dass der vergrößerte Spaltabschnitt (65a) gebildet wird.

4. Spritzgießmaschine (10) nach Anspruch 2 oder 3,
wobei ein ausgesparter Abschnitt (535) an einer Außenumfangsfläche des Verbindungsstifts (50, 51, 52, 53, 54) derart vorgesehen ist, dass der vergrößerte Spaltabschnitt (65a) gebildet wird.

5. Spritzgießmaschine (10) nach Anspruch 1, ferner umfassend:
ein Dichtungselement, welches den Lagerspalt (65) abdichtet.

6. Spritzgießmaschine (10) nach einem der Ansprüche 1 bis 4, ferner umfassend:
einen Ausleitungsmechanismus (503), der mit dem Ausleitungsweg (67, 68) verbunden ist, um das Schmiermittel auszuleiten.

7. Spritzgießmaschine (10) nach einem der Ansprüche 1 bis 6,
wobei der Zuführweg (62, 63) an dem Verbindungsstift (50, 51, 52, 53, 54) gebildet ist.

8. Spritzgießmaschine (10) nach einem der Ansprüche 1 bis 7,
wobei eine Sammelnut (66), die mit dem Ausleitungsweg (67, 68) kommuniziert, an einer Innenumfangsfläche der Buchse (55) vorgesehen ist.

9. Spritzgießmaschine nach einem der Ansprüche 1 bis 8,
wobei eine Sammelnut (66), die mit dem Ausleitungsweg (67, 68) kommuniziert, an einer Außenumfangsfläche des Verbindungsstifts (50, 51, 52, 53, 54) vorgesehen ist.

## Revendications

1. Une machine de moulage par injection (10) comprenant :
un mécanisme de bascule (150) qui relie une platine mobile (120) et une platine arrière (130) l'une à l'autre,
dans laquelle le mécanisme de bascule (150) comprend
une pluralité de liaisons (151, 152, 153, 154),
une première partie de raccordement qui relie la platine mobile (120) et la liaison (151, 152, 153, 154) l'une à l'autre,
une seconde partie de raccordement qui relie les liaisons (151, 152, 153, 154) les unes aux autres, et
une troisième partie de raccordement qui relie la platine arrière (130) et la liaison (151, 152, 153, 154) l'une à l'autre, **caractérisée en ce que**
au moins une partie de raccordement (40) de la première à la troisième parties de raccordement comprend
une chemise (55),
une broche de liaison (50, 51, 52, 53, 54) qui est insérée dans la chemise (55),
un trajet d'alimentation (62, 63) par lequel un lubrifiant est fourni à un jeu de palier (65) qui est un espace situé entre la chemise (55) et la broche de liaison (50, 51, 52, 53, 54),
un trajet d'évacuation (67, 68) par lequel le lubrifiant est évacué du jeu de palier (65), et
un mécanisme de facilitation d'alimentation circonférentielle qui facilite l'alimentation en lubrifiant fourni par une partie d'ouverture (64) côté jeu de palier (65) du trajet d'alimentation (62, 63) au jeu de palier (65), dans une direction circonférentielle de la broche de liaison (50, 51, 52, 53, 54),
le mécanisme de facilitation d'alimentation circonférentielle est une pluralité de parties d'ouverture de trajet d'alimentation (64) qui sont prévues dans la direction circonférentielle de la broche de liaison (50, 51, 52, 53, 54), et
les parties d'ouverture de trajet d'alimentation (64) sont prévues sur une surface périphérique externe de la broche de liaison (50, 51, 52, 53, 54) et sont prévues pour prendre en sandwich une partie mobile de la partie de liaison lorsque l'on regarde dans la direction circonférentielle de la broche de liaison (50, 51, 52, 53, 54).

2. La machine de moulage par injection (10) selon la revendication 1,
dans laquelle le mécanisme de facilitation d'alimentation circonférentielle est une partie d'espace agrandi (65a) qui est prévue dans le jeu de palier (65), et
dans laquelle une partie d'espace réduit (65b) ayant un jeu inférieur à celui de la partie d'espace agrandi (65a) est positionnée au niveau de chacun des deux côtés externes de la partie d'espace agrandi (65a) dans une direction axiale de la broche de liaison (50, 51, 52, 53, 54).

3. La machine de moulage par injection (10) selon la revendication 2,
dans laquelle une partie renfoncée (551) est prévue sur une surface périphérique interne de la chemise (55) de sorte que la partie d'espace agrandi (65a) soit formée.

4. La machine de moulage par injection (10) selon la revendication 2 ou 3,
dans laquelle une partie renfoncée (553) est prévue sur une surface périphérique externe de la broche de liaison (50, 51, 52, 53, 54) de sorte que la partie d'espace agrandi (65a) soit formée.

5. La machine de moulage par injection (10) selon la revendication 1, comprenant en outre :
un élément d'étanchéité qui ferme le jeu de palier (65).

6. La machine de moulage par injection (10) selon l'une quelconque des revendications 1 à 4, comprenant en outre :
un mécanisme d'évacuation (503) qui est relié au trajet d'évacuation (67, 68) afin d'évacuer le lubrifiant.

7. La machine de moulage par injection (10) selon l'une quelconque des revendications 1 à 6,
dans laquelle le trajet d'alimentation (62, 63) est formé sur la broche de liaison (50, 51, 52, 53, 54).

8. La machine de moulage par injection (10) selon l'une quelconque des revendications 1 à 7,
dans laquelle une rainure de collecte (66) qui communique avec le trajet d'évacuation (67, 68) est prévue sur une surface périphérique interne de la chemise (55).

9. La machine de moulage par injection selon l'une quelconque des revendications 1 à 8,
dans laquelle une rainure de collecte (66) qui communique avec le trajet d'évacuation (67, 68) est prévue sur une surface périphérique externe de la broche de liaison (50, 51, 52, 53, 54).
